# EUROPEAN PATENT SPECIFICATION

(11) **EP 2 073 465 B1**
(45) Date of publication and mention of the grant of the patent: **02.05.2012**
(21) Application number: 08021185.7
(22) Date of filing: 05.12.2008
(51) Int. Cl.: H04L 12/56

(54) **Method and system for a distinct physical pattern on an active channel to indicate a data rate transition for energy efficient ethernet**
Verfahren und System für ein charakteristisches physikalisches Muster in einem aktiven Kanal zur Angabe der Datenübertragungsrate für ein energieeffizientes Ethernet
Procédé et système pour modèle physique distinct sur un canal actif afin d'indiquer une transition de débit pour un Ethernet efficace en énergie

(30) Priority: 17.12.2007 US 14357 P; 22.09.2008 US 235506
(43) Date of publication of application: 24.06.2009
(73) Proprietor: Broadcom Corporation, Irvine, CA 92617 (US)
(72) Inventor: Diab, Wael William, San Francisco, CA 94109 (US); Frazier, Howard, Pleasanton, CA 94566 (US)
(74) Representative: Jehle, Volker Armin

(56) References cited:
- EP-A- 1 484 876
- GB-A- 2 337 672
- BENNETT M ET AL: "Energy Efficient Ethernet" INTERNET CITATION, [Online] 16 July 2007 (2007-07-16), pages 1-70, XP002509615 Retrieved from the Internet: URL:http://www.ieee802.org/802_tutorials/j uly07/IEEE-tutorial-energy-effi cient-ethernet.pdf> [retrieved on 2008-12-15]

## Description

### FIELD OF THE INVENTION

Certain embodiments of the invention relate to networking. More specifically, certain embodiments of the invention relate to a method and system for a distinct physical pattern on an active channel to indicate a data rate transition for energy efficient Ethernet.

### BACKGROUND OF THE INVENTION

With the increasing popularity of electronics such as desktop computers, laptop computers, and handheld devices such as smart phones and PDA's, communication networks, and in particular Ethernet networks, are becoming an increasingly popular means of exchanging data of various types and sizes for a variety of applications. In this regard, Ethernet networks are increasingly being utilized to carry, for example, voice, data, and multimedia. Broadband connectivity including internet, cable, phone and VOIP offered by service providers has led to increased traffic and more recently, migration to Ethernet networking. Much of the demand for Ethernet connectivity is driven by a shift to electronic lifestyles involving desktop computers, laptop computers, and various handheld devices such as smart phones and PDA's. Applications such as search engines, reservation systems and video on demand that may be offered at all hours of a day and seven days a week, have become increasingly popular. These recent developments have led to increased demand on datacenters, aggregation, high performance computing (HPC) and core networking.

As the number of devices connected to data networks increases and higher data rates are required, there is a growing need for new transmission technologies which enable higher data rates. Conventionally, however, increased data rates often results in significant increases in power consumption. In this regard, as an increasing number of portable and/or handheld devices are enabled for Ethernet communications, battery life may be a concern when communicating over Ethernet networks. Accordingly, ways of reducing power consumption when communicating over Ethernet networks may be needed.

EP 1 48 876 A2 discloses that CSMA/CD is utilized to implement flow control in a full-duplex Ethernet network in a lossless fashion, without reliance upon a single signal to describe the state of both the transmitting and receiving process of a station that is to be flow controlled. Flow control transmit on/off ("XON/XOFF") messages are transmitted by a receiving station that is about to be congested, across the physical layer to the transmitting station whose data output is to be controlled.

GB 2 337 672 A discloses that data can be transmitted between an Ethernet network hub and an end station at a plurality of different data rates, the rate being selected by an auto-negotiation process. The data connection is maintained in the absence of meaningful transmitted data by the transmission of a continuous sequence of 'idle state' symbols. The occurrence of errors represented by a non-idle state symbol immediately followed by an idle state symbol is monitored. When the rate of occurrence of errors exceeds a threshold the data connection is forced to proceed at a lower data rate.
The presentation "Energy Efficient Ethernet" by M Bennett et al as retrieved from the Internet on 15.12.2008 at http://www.ieee802.org/802_tutorials/july07/IEEE-tutorial-energy-efficient-ethernet.pdf on pages 1-70 discloses a method to reduce energy use by an Ethernet interface by rapidly changing to a lower link speed during periods of low link utilization.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for a distinct physical pattern on an active channel to indicate a data rate transition for energy efficient Ethernet, substantially as shown in and/or described in connection with at least one of the figures, as set forth more completely in the claims.

According to an aspect of the invention, a method for networking is provided according to claim 1.

According to another aspect of the invention, a system for networking is provided according to claim 7.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an Ethernet connection between two nodes, in accordance with an embodiment of the invention.

FIG. 2 is a block diagram illustrating an exemplary Ethernet over twisted pair PHY device architecture comprising a multi-rate capable physical block, in accordance with an embodiment of the invention.

FIG. 3 is a diagram illustrating exemplary activity on an Ethernet link, in accordance with an embodiment of the invention.

FIG. 4A is a diagram illustrating activity on four channels comprising an exemplary Ethernet link, in accordance with an embodiment of the invention.

FIG. 4B is a diagram illustrating activity on four channels comprising an exemplary Ethernet link, in accordance with an embodiment of the invention.

FIG. 4C is a diagram illustrating activity on four channels comprising an exemplary Ethernet link, in accordance with an embodiment of the invention.

FIG. 5 is a flow chart illustrating exemplary steps for utilizing a distinct physical pattern on an active channel to indicate a data rate transition, in accordance with an embodiment of the invention.

### DETAILED DESCRIPTION OF THE INVENTION

Certain embodiments of the invention may be found in a method and system for a distinct physical pattern on an active channel to indicate a data rate transition for energy efficient Ethernet. In this regard, one or more distinct physical patterns may be transmitted on one or more active channels of a network link during an inter-packet gap (IPG) to control a data rate on the network link. The unique physical pattern may be transmitted instead of or in addition to one or more IDLE symbols. The distinct physical pattern may communicate a data rate to be utilized on the network link, indicate when a data rate transition is to occur on the network link, indicate that a change in data rate is desired, indicate which data rate management techniques to utilize to realize a data rate, or control which of the one or more channels of the network link are to be utilized for communicating data. The data rate on the link may be controlled based on power consumption on the link and//or power consumptions of one or more nodes communicatively coupled to said network link.

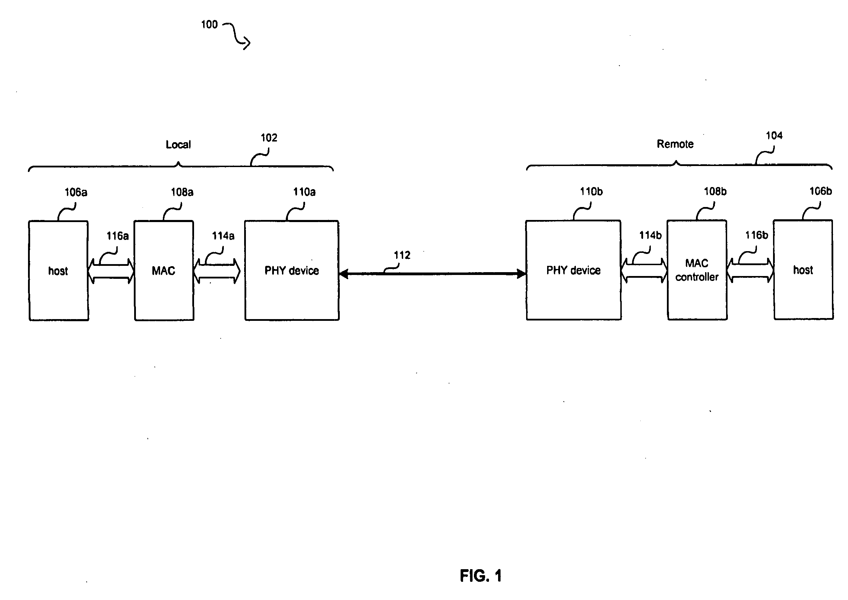

FIG. 1 is a block diagram illustrating an Ethernet connection between two nodes, in accordance with an embodiment of the invention. Referring to FIG. 1, there is shown a system 100 that comprises a node 102 and a node 104. The node 102 and the node 104 may communicate via an Ethernet link 112.

The node 102 and the node 104 may communicate via the Ethernet link 112. The Ethernet link 112 is not limited to any specific medium and may utilize any suitable medium. Exemplary Ethernet link 112 media may comprise copper, optical and/or backplane technologies. For example, a copper medium such as STP, Cat3, Cat 5, Cat 5e, Cat 6, Cat 7 and/or Cat 7a as well as ISO nomenclature variants may be utilized. Additionally, copper media technologies such as InfiniBand, Ribbon and backplane may be utilized. With regard to optical media for the Ethernet link 112, single mode fiber as well as multi-mode fiber may be utilized.

In an exemplary embodiment of the invention, the link 112 may comprise up to four or more physical channels, each of which may, for example, comprise an unshielded twisted pair (UTP). The node 102 and the node 104 may communicate via two or more physical channels comprising the link 112. For example, Ethernet over twisted pair standards 10BASE-T and 100BASE-TX may utilize two pairs of UTP while Ethernet over twisted pair standards 1000BASE-T and 10GBASE-T may utilize four pairs of UTP. In this regard, however, aspects of the invention may enable varying the number of physical channels via which data is communicated.

In an exemplary embodiment of the invention, the nodes 102 and/or 104 may comprise a twisted pair PHY capable of operating at one or more standard rates such as 10Mbps, 100Mbps, 1Gbps, and 10Gbps (10BASE-T, 100GBASE-TX, 1GBASE-T, and/or 10GBASE-T); potentially standardized rates such as 40Gbps and 100Gbps; and/or non-standard rates such as 2.5Gbps and 5Gbps.

In an exemplary embodiment of the invention, the nodes 102 and/or 104 may comprise a backplane PHY capable of operating at one or more standard rates such as 10Gbps (10GBASE-KX4 and/or 10GBASE-KR); and/or non-standard rates such as 2.5Gbps and 5Gbps.

In an exemplary embodiment of the invention, the nodes 102 and/or 104 may comprise an optical PHY capable of operating at one or more standard rates such as 10Mbps. 10Mbps, 1Gbps, and 10Gbps; potentially standardized rates such as 40Gbps and 100Gbps; and/or non-standardized rates such as 2.5Gbps and 5Gbps. In this regard, the optical PHY may be a passive optical network (PON) PHY.

In addition, the nodes, the nodes 102 and/or 104 may support multi-lane topologies such as 40Gbps CR4, ER4, KR4; 100Gbps CR10, SR10 and/or 10Gbps LX4 and CX4. Also, serial electrical and copper single channel technologies such as KX, KR, SR, LR, LRM, SX, LX, CX, BX10, LX10 may be supported. Non standard speeds and non-standard technologies, for example, single channel, two channel or four channels may also be supported. More over, TDM technologies such as PON at various speeds may be supported by the nodes 102 and/or 104.

The node 102 may comprise a host 106a, a medium access control (MAC) controller 108a, and a PHY device 104a. The node 104 may comprise a host 106b, a MAC controller 108b, and a PHY device 110b. Notwithstanding, the invention is not limited in this regard. In various embodiments of the invention, the node 102 and/or 104 may comprise, for example, computer systems or audio/video (A/V) enabled equipment. In this regard, AN equipment may, for example, comprise, a microphone, an instrument, a sound board, a sound card, a video camera, a media player, a graphics card, or other audio and/or video device. Additionally, the nodes 102 and 104 may be enabled to utilize Audio/Video Bridging and/or Audio/video bridging extensions (collectively referred to herein as audio video bridging or AVB) for the exchange of multimedia content and associated control and/or auxiliary data.

The PHY devices 110a and 110b may each comprise suitable logic, circuitry, and/or code that may enable communication, for example, transmission and reception of data, between the node 102 and the node 104. The PHY devices 110a and 110b may support, for example, Ethernet over copper, Ethernet over fiber, and/or backplane Ethernet operations. The PHY devices 110a and 110b may enable multi-rate communications, such as 10 Mbps, 100 Mbps, 1000 Mbps (or 1 Gbps), 2.5Gbps, 4Gbps, 10 Gbps, or 40Gbps, for example. In this regard, the PHY devices 110a and 110b may support standard-based data rates and/or non-standard data rates. Moreover, the PHY devices 110a and 110b may support standard Ethernet link lengths or ranges of operation and/or extended ranges of operation. The PHY devices 110a and 110b may enable communication between the node 102 and the node 104 by utilizing a link discovery signaling (LDS) operation that enables detection of active operations in the other node. In this regard the LDS operation may be configured for supporting a standard Ethernet operation and/or an extended range Ethernet operation. The PHY devices 110a and 110b may also support autonegotiation for identifying and selecting communication parameters such as speed and duplex mode.

In various embodiments of the invention, the PHY devices 110a and 110b may comprise suitable logic, circuitry, and/or code that may enable transmission and/or reception at a high(er) data in one direction and transmission and/or reception at a low(er) data rate in the other direction. For example, the node 102 may comprise a multimedia server and the node 104 may comprise a multimedia client. In this regard, the node 102 may transmit multimedia data, for example, to the remote partner 104 at high(er) data rates while the node 104 may transmit control or auxiliary data associated with the multimedia content at low(er) data rates.

The data transmitted and/or received by the PHY devices 110a and 110b may be formatted in accordance with the well-known OSI protocol standard. The OSI model partitions operability and functionality into seven distinct and hierarchical layers. Generally, each layer in the OSI model is structured so that it may provide a service to the immediately higher interfacing layer. For example, layer 1, or physical layer, may provide services to layer 2 and layer 2 may provide services to layer 3. The data transmitted may comprise packets of Ethernet media independent interface (MII) data which may be delimited by start of stream and end of stream delimiters, for example. Exemplary MIIs may comprise gigabit MII (GMII), 10Gigabit MII (XGMII), Serial Gigabit MII (SGMII), and Reduced Gigabit MII (RGMII).

In an exemplary embodiment of the invention illustrated in FIG. 1, the hosts 106a and 106b may represent layer 3 and above, the MAC controllers 108a and 108b may represent layer 2 and above and the PHY devices 110a and 110b may represent the operability and/or functionality of layer 1 or the physical layer. In this regard, the PHY devices 110a and 110b may be referred to as Physical layer transmitters and/or receivers, physical layer transceivers, PHY transceivers, PHYceivers, or PHY, for example. The hosts 106a and 106b may comprise suitable logic, circuitry, and/or code that may enable operability and/or functionality of the five highest functional layers for data packets that are to be transmitted over the link 112. Since each layer in the OSI model provides a service to the immediately higher interfacing layer, the MAC controllers 108a and 108b may provide the necessary services to the hosts 106a and 106b to ensure that packets are suitably formatted and communicated to the PHY devices 110a and 110b. During transmission, each layer may add its own header to the data passed on from the interfacing layer above it. However, during reception, a compatible device having a similar OSI stack may strip off the headers as the message passes from the lower layers up to the higher layers.

The PHY devices 110a and 110b may be configured to handle all the physical layer requirements, which include, but are not limited to, packetization, data transfer and serialization/deserialization (SERDES), in instances where such an operation is required. Data packets received by the PHY devices 110a and 110b from MAC controllers 108a and 108b, respectively, may include data and header information for each of the above six functional layers. The PHY devices 110a and 110b may be configured to encode data packets that are to be transmitted over the link 112 and/or to decode data packets received from the link 112. Moreover, control characters may be generated by a sub-layer within the physical layer, for example, the physical coding sub-layer (PCS) in a 10GBASE-T system. These control characters, also known as special symbols, may be transmitted on silent channels or during inter-packet gap (IPG, which may also be referred to as inter-frame gap) on active channels that are not actively carrying data packets or on active channels. For example, control characters may comprise IDLE symbols, or similar information may be periodically transmitted via silent channels or during or during IPG on active channels.

The MAC controller 108a may comprise suitable logic, circuitry, and/or code that may enable handling of data link layer, layer 2, operability and/or functionality in the node 102. Similarly, the MAC controller 108b may comprise suitable logic, circuitry, and/or code that may enable handling of layer 2 operability and/or functionality in the node 104. The MAC controllers 108a and 108b may be configured to implement Ethernet protocols, such as those based on the IEEE 802.3 standard, for example. Notwithstanding, the invention is not limited in this regard.

The MAC controller 108a may communicate with the PHY device 110a via an interface 114a and with the host 106a via a bus controller interface 116a. The MAC controller 108b may communicate with the PHY device 110b via an interface 114b and with the host 106b via a bus controller interface 116b. The interfaces 114a and 114b correspond to Ethernet interfaces that comprise protocol and/or link management control signals. The interfaces 114a and 114b may be multi-rate capable interfaces and/or media independent interfaces (MII). The bus controller interfaces 116a and 116b may correspond to PCI or PCI-X interfaces. Notwithstanding, the invention is not limited in this regard.

In operation, PHY devices such as the PHY devices 110a and 110b may conventionally transmit data via a fixed number of physical channels at a fixed data rate which may result in network links being underutilized for significant portions of time. In this regard, when the nodes 202 and 204 first establish a connection, they may exchange some preliminary information and/or training signals. In this regard, the nodes 102 and 104 may negotiate a data rate (e.g., 10Gbps) and duplex mode (e.g., full-duplex) for communicating with each other. Additionally, in order to establish reliable communications, each of the nodes 102 and 104 may need to "train" or adjust various parameters and/or circuitry in a node to account for variables such as the type of cabling over which data is being communicated and the environmental conditions (e.g. temperature) surrounding the cabling. Once the nodes are "trained", they may initially transmit data at a first data rate. In this regard, conventional PHY devices may distribute traffic evenly over all available channels and between packets of actual data, during the IPG, IDLE symbols or similar information may be communicated.

Based, for example, on link utilization, past or present traffic statistics, and/or available resources (e.g., power, buffer space, processor time, etc.), it may be determined that a data rate on the link 112 may be higher than necessary or desired. Accordingly, reducing the data rate of the connection between the nodes 102 and 104 may enable the nodes 102 and 104 to communicate in a more energy efficient manner. In this regard, the data rate may be controlled via one or more data rate management techniques such as controlling a number of channels utilized to communicate data, controlling the signal constellation utilized for representing data on the link, controlling a rate at which symbols are transmitted, and controlling the length of time between packets (the IPG).

Similarly, based, for example, on link utilization, past or present traffic statistics, and/or available resources comprising for example, power, buffer space, and/or processor time, it may be determined that a data rate on the link may be lower than necessary or desired. Accordingly, in instances that the data rate may be less than a maximum data rate, then the data rate may be increased. The data rate may be increased via one or more data rate management techniques such as controlling a number of channels utilized to communicate data, controlling the signal constellation utilized for representing data on the link, controlling a rate at which symbols are transmitted, and/or controlling the length of time between packets (the IPG).

When controlling a data rate on the link 112, the nodes 102 and 104 may need a way to indicate, for example, that a different data rate may be desired and/or necessary, to indicate when the transition in data rate is to occur, indicate what the different data rate should be, and indicate how the new data rate is to be achieved. Accordingly, aspects of the invention may enable utilizing one or more distinct physical patterns transmitted in place of and/or in addition to IDLE symbols, to coordinate data rate control on an Ethernet link. In this regard, a distinct physical pattern may be transmitted during an inter-packet gap (IPG) on a channel that may be active and/or may be transmitted during, or as part of, an Ethernet packet. The distinct physical pattern(s) may comprise a distinct sequence, or ordered set, of voltages, symbols, and/or characters. With regards to when the transition is to occur, the distinct physical pattern may indicate that the transition in data rate is to occur, for example, before a specified Ethernet packet, during a specified packet boundary (e.g., on a specified or designated bit of the packet), or during a refresh period.

In various embodiments of the invention, a distinct physical pattern may be utilized for some but not all data rate transitions. For example, a distinct physical signal may be utilized to indicate a transition to higher data rates, but other techniques may be utilized to indicate a transition to a lower data rate.

In various embodiments of the invention, distinct physical patterns may also be communicated over the media independent interfaces to indicate the data rate transition on the link 112 to higher layer functions of the nodes 102 and 104. In this regard, the higher layer functions may adjust, for example, clock speeds, buffer sizes, and/or power allocation, based on the data rate on the link 112.

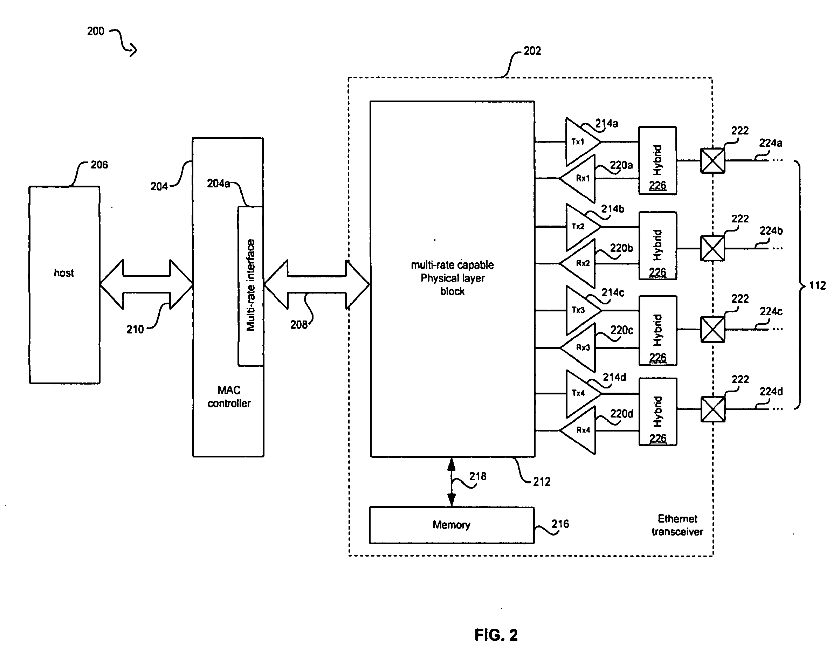

FIG. 2 is a block diagram illustrating an exemplary Ethernet over twisted pair PHY device architecture comprising a multi-rate capable physical block, in accordance with an embodiment of the invention. Referring to FIG. 2, there is shown a node 200 which may comprises an Ethernet over twisted pair PHY device 202, a MAC controller 204, a host 206, an interface 208, and a bus controller interface 210. The PHY device 202 may be an integrated device which may comprise a multi-rate capable physical layer block 212, one or more transmitters 214, one or more receivers 220, a memory 216, a memory interface 218, and one or more input/output interfaces 222.

The PHY device 202 may be an integrated device that comprises a multi-rate capable physical layer block 212, one or more transmitters 214, one or more receivers 220, a memory 216, a memory interface 218, and one or more input/output interfaces 222. The operation of the PHY device 202 may be the same as or substantially similar to that of the PHY devices 110a and 110b disclosed in FIG. 1. In this regard, the PHY device 202 may provide layer 1 (physical layer) operability and/or functionality that enables communication with a remote PHY device. Similarly, the operation of the MAC controller 204, the host 206, the interface 208, and the bus controller 210 may be the same as or substantially similar to the respective MAC controllers 108a and 108b, hosts 106a and 106b, interfaces 114a and 114b, and bus controller interfaces 116a and 116b as described in FIG. 1. The MAC controller 204 may comprise a multi-rate capable interface 204a that may comprise suitable logic, circuitry, and/or code to enable communication with the PHY device 202 at a plurality of data rates via the interface 208.

The multi-rate capable physical layer block 212 in the PHY device 202 may comprise suitable logic, circuitry, and/or code that may enable operability and/or functionality of physical layer requirements. In this regard, the multi-rate capable physical layer block 212 may enable generating the appropriate link discovery signaling utilized for establishing communication with a remote PHY device in a remote node. The multi-rate capable physical layer block 212 may communicate with the MAC controller 204 via the interface 208. In one aspect of the invention, the interface 208 may be a media independent interface (MII) and may be configured to utilize a plurality of serial data lanes for receiving data from the multi-rate capable physical layer block 212 and/or for transmitting data to the multi-rate capable physical layer block 212. The multi-rate capable physical layer block 212 may be configured to operate in one or more of a plurality of communication modes, where each communication mode may implement a different communication protocol. These communication modes may include, but are not limited to, Ethernet over twisted pair standards 10BASE-T, 100BASE-TX, 1000BASE-T, 10GBASE-T, and other similar protocols that utilize multiple physical channels between nodes. The multi-rate physical layer block 212 may be configured to operate in a particular mode of operation upon initialization or during operation. For example, auto-negotiation may utilize the FLP bursts to establish a rate (e.g. 10Mbps, 100Mbps, 1000Mbps, or 10Gbps) and mode (half-duplex or full-duplex) for transmitting information.

The multi-rate capable physical layer block 212 may be coupled to memory 216 through the memory interface 218, which may be implemented as a serial interface or a bus. The memory 216 may comprise suitable logic, circuitry, and/or code that may enable storage or programming of information that includes parameters and/or code that may effectuate the operation of the multi-rate capable physical layer block 212. The parameters may comprise configuration data and the code may comprise operational code such as software and/or firmware, but the information need not be limited in this regard. Moreover, the parameters may include adaptive filter and/or block coefficients for use, for example, by the multi-rate capable physical layer block 212 and/or the hybrids 226.

Each of the transmitters 214a, 214b, 214c, 214d may comprise suitable logic, circuitry, and/or code that may enable transmission of data from the node 200 to a remote node via, for example, the link 112 in FIG. 1. The receivers 220a, 220b, 220c, 220d may comprise suitable logic, circuitry, and/or code that may enable receiving data from a remote node. Each of the transmitters 214a, 214b, 214c, 214d and receivers 220a, 220b, 220c, 220d in the PHY device 202 may correspond to a physical channel that may comprise the link 112. In this manner, a transmitter/receiver pair may interface with each of the physical channels 224a, 224b, 224c, 224d. In this regard, the transmitter/receiver pairs may be enabled to provide the appropriate communication rate and mode for each physical channel.

The input/output interfaces 222 may comprise suitable logic circuitry, and/or code that may enable the PHY device 202 to impress signal information onto a physical channel, for example a twisted pair of the link 112 disclosed in FIG. 1. Consequently, the input/output interfaces 222 may, for example, provide conversion between differential and single-ended, balanced and unbalanced, signaling methods. In this regard, the conversion may depend on the signaling method utilized by the transmitter 214, the receiver 220. and the type of medium of the physical channel. Accordingly, the input/output interfaces 222 may comprise one or more baluns and/or transformers and may, for example, enable transmission over a twisted pair. Additionally, the input/output interfaces 222 may be internal or external to the PHY device 202. In this regard, if the PHY device 202 comprises an integrated circuit, then "internal" may, for example, refer to being "on-chip" and/or sharing the same substrate. Similarly, if the PHY device 202 comprises one or more discrete components, then "internal" may, for example, refer to being on the same printed circuit board or being within a common physical package.

In operation, the PHY device 202 may be enabled to transmit and receive simultaneously over up to four or more physical links. Accordingly, the node 200 may comprise a number of hybrids 226 corresponding to the number of physical links. Each hybrid 226 may comprise suitable logic, circuitry, and/or code that may enable separating transmitted and received signals from a physical link. For example, the hybrids may comprise echo cancellers, far-end crosstalk (FEXT) cancellers, and/or near-end crosstalk (NEXT) cancellers. Each hybrid 226 in the node 300 may be communicatively coupled to an input/output interface 222.

In various embodiments of the invention, the node 200 may disable, or put into a low(er) power state, one or more of the physical channels 224, when those one or more channels are not required to meet current and/or future demand of the link. In this manner, transmitters 214, receivers 220, hybrids 226, and/or portions of the multi-rate PHY block 212 associated with the unused channels may be powered down. In various embodiments of the invention, a channel in a low(er) power state a may convey little or no data any may be silent, convey IDLE symbols, and/or convey other energy. In some instances, aspects of the invention may enable placing all channels of a link into a low(er) power state. In other instances, all channels of a link may remain active and a data rate on each of the channels may be controlled.

In operation, the node 200 may communicate with a remote partner via the link 112. For example, for 100 Mbps Ethernet, the node 200 may transmit to a remote partner via the link 224a and may receive data from the remote partner via the link 224b. In this regard, in instances when there may be no data for the node 200 to transmit, the node 200 may transmit IDLE symbols to maintain synchronization with the remote node. However, in order to coordinate data rates on the link 112, aspects of the invention may enable transmitting one or more distinct physical patterns on the link. Each of the distinct physical pattern(s) may comprise a sequence, or ordered set, of voltages, symbols, and/or characters. The distinct physical pattern(s) may be in addition to and/or in place of IDLE symbols during an IPG.

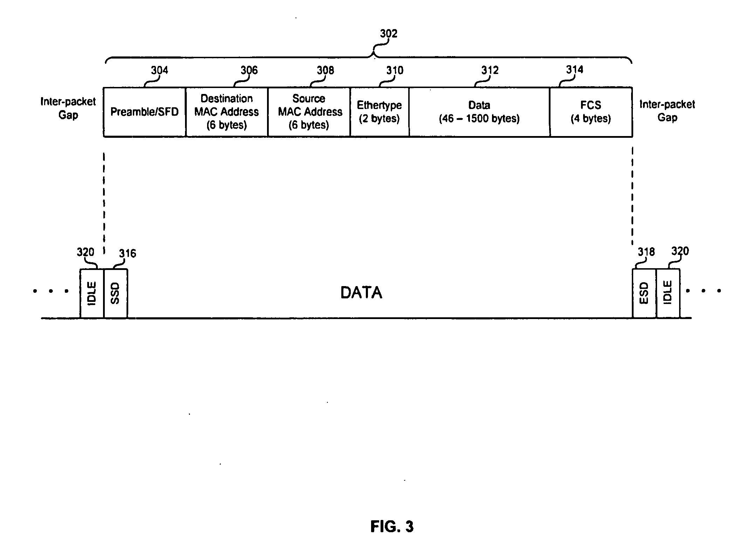

FIG. 3 is a diagram illustrating exemplary activity on an Ethernet link, in accordance with an embodiment of the invention. Referring to FIG. 3, there is shown an exemplary Ethernet packet 302, preceded and followed by IDLE symbols 320.

The Ethernet packet 302 may comprise a preamble 304, destination MAC address field 306, a source MAC address field 308, an Ethertype field 310, a data field 312, and a packet check sequence (FCS) 314.

The first 62 bits of the preamble may be utilized to phase lock a receiving PHY device to a transmitting PHY device. The last 2 bits of the preamble, '11', may indicate the end of the preamble and that the next bit received will be real data. The final byte of the preamble (the last 8 bits ending in '11') is also known as a start of packet delimiter (SFD) 316. In various embodiments of the invention, the first 8 bits of the preamble may be replaced with a start of stream delimiter (SSD) 316 to indicate the end of an IPG and the beginning of a packet.

The destination MAC address field 306 may comprise information that may be utilized to identify the node that the packet is to be sent to. The source MAC address 308 field may comprise information that may be utilized to identify the node that originated the packet. The Ethertype field 310 may comprise information that may be utilized to identify the protocol (e.g. IPv4 or IPv6) being transported in the packet. The data field 312 may contain the data being transmitted. The FCS 314 may comprise information that may be utilized to provide error detection for the packet. In various instances of the invention, the packet 302 may be immediately followed by an end of sequence delimiter (ESD) 318 to indicate the end of a packet and the beginning of an IPG.

The IDLE symbols 420 may be utilized to maintain synchronization between nodes. In this regard, conventional systems may utilize IDLE symbols as defined in the 802.3 standards. However, aspects of the invention may enable altering and/or replacing or more of the IDLE symbols 320 to transmit one or more distinct physical patterns to coordinate a data rate at which packets such as the packet 302 are transmitted.

In various embodiments of the invention the distinct physical pattern may be communicated utilizing one or more discrete voltage and/or power levels communicated over the channel(s). In various embodiments of the invention, the discrete levels that are transmitted and/or the sequence in which the levels are transmitted may correspond to control information for a data rate transition. In some instances, a portion of the sequence may correspond to a preamble which may be operable to alert a receiver that data rate transition information is forthcoming. In some instances, the data rate transition information may be packetized and may comprise for example, a header, a payload, and/or a CRC. In various embodiments of the invention, the distinct pattern may be encoded utilizing, for example, LDPC encoding in order to enable error correction at the receiver.

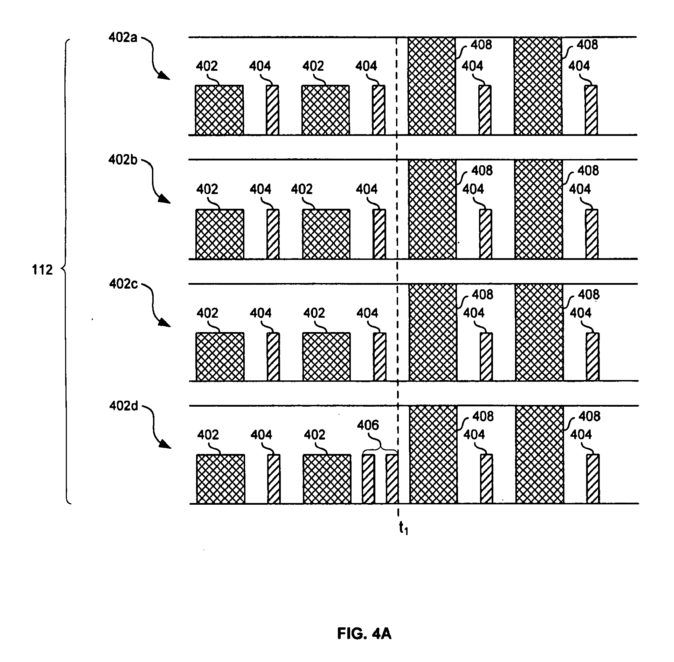

FIG. 4A is a diagram illustrating activity on four channels comprising an exemplary Ethernet link, in accordance with an embodiment of the invention. Referring to FIG. 4A the link 112 may comprise four channels 402a, ..., 402d.

The channels 402a, ..., 402d may be similar to or the same as the channels 224a, ..., 224d described with respect to FIG. 2.

In the exemplary operation depicted, prior to time t₁, the channels 402a, ..., 402d may be transmitting data at less than the maximum data rate for each channel. In between blocks of data 402, which may represent packets, packets, etc., IDLE symbols 404 may be transmitted. However, prior to time t₁, it may be determined that a data rate of the link may need to be increased so as to, for example, accommodate a large multimedia stream which will soon reach the link. Accordingly, a distinct pattern 406 may be transmitted during an IPG on the channel 402d to coordinate an increase in the data rate. In this regard, the distinct pattern 406 may, for example, convey the new data rate and indicate when the data rate transition should occur. Subsequent to the distinct physical pattern 406, at time t₁, the channels 402a, ..., 402d may transition to a higher data rate and transmit blocks of data 408.

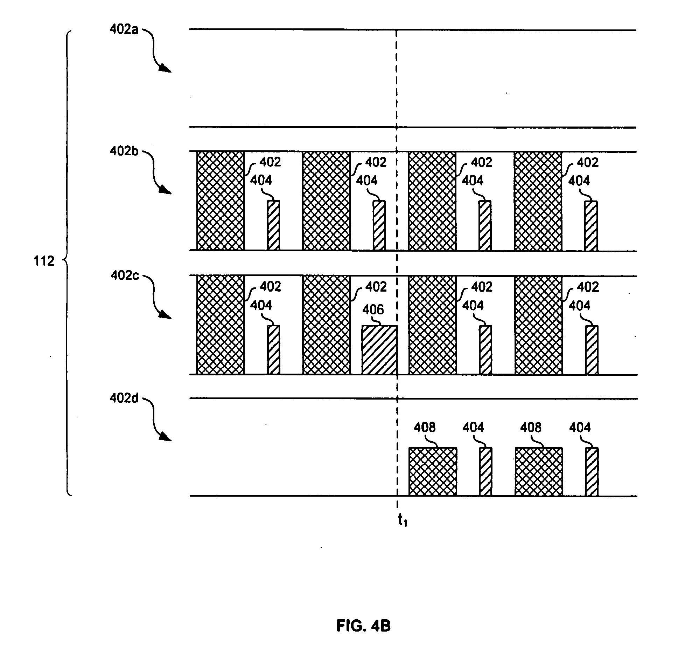

FIG. 4B is a diagram illustrating activity on four channels comprising an exemplary Ethernet link, in accordance with an embodiment of the invention. Referring to FIG. 4B the link 112 may comprise four channels 402a, ..., 402d.

The channels 402a, ..., 402d may be similar to or the same as the channels 224a, ..., 224d described with respect to FIG. 2.

In the exemplary operation depicted, prior to time t₁, the channels 402b and 402c may be active and transmitting data at the maximum data rate for each channel. In between blocks of data 402, which may represent packets, packets, etc., IDLE symbols 404 may be transmitted. However, prior to time t₁, it may be determined that a data rate of the link may need to increase to, for example, accommodate a large multimedia stream which will soon reach the link. Accordingly, a distinct pattern 406 may be transmitted during an IPG on the channel 402c to coordinate an increase in the data rate. In this regard, the distinct pattern 406 may, for example, convey the new data rate and indicate when the data rate transition should occur. Subsequent to the distinct physical pattern 406, at time t_{1,} the channels 402d may start-up and become active to begin communicating blocks of data 408 and IDLE symbols 404.

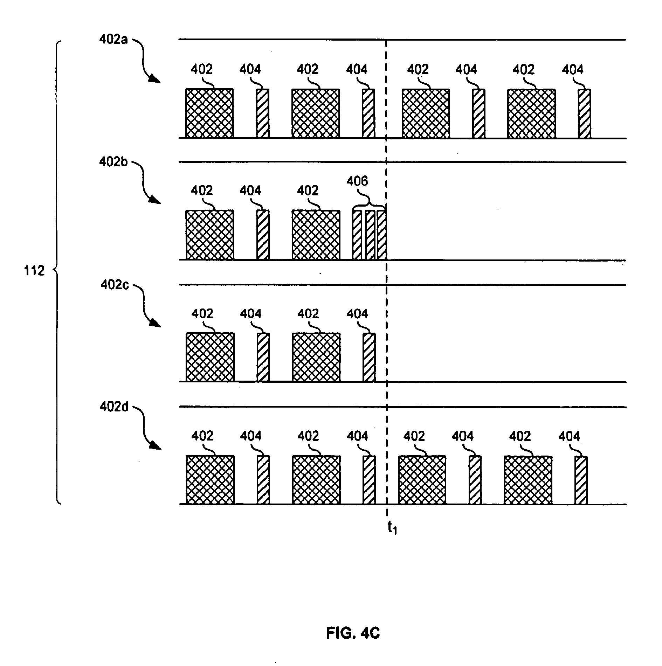

FIG. 4C is a diagram illustrating activity on four channels comprising an exemplary Ethernet link, in accordance with an embodiment of the invention. Referring to FIG. 4C the link 112 may comprise four channels 402a, ..., 402d.

The channels 402a, ..., 402d may be similar to or the same as the channels 224a, ..., 224d described with respect to FIG. 2.

In the exemplary operation depicted, prior to time t₁, the channels 402b and 402c may be active and transmitting data. In between blocks of data 402, which may represent packets and/or packets, IDLE symbols 404 may be transmitted. However, prior to time t₁, it may be determined that a data rate of the link may be decreased due, for example, to a multimedia stream coming to an end. Accordingly, a distinct pattern 406 may be transmitted during an IPG on the channel 402c to coordinate an decrease in the data rate. In this regard, the distinct pattern 406 may, for example, convey the new data rate and indicate when the data rate transition should occur. Subsequent to the distinct physical pattern 406, at time t₁, the channel 402b and 402c may be shut down and cease transmitting data.

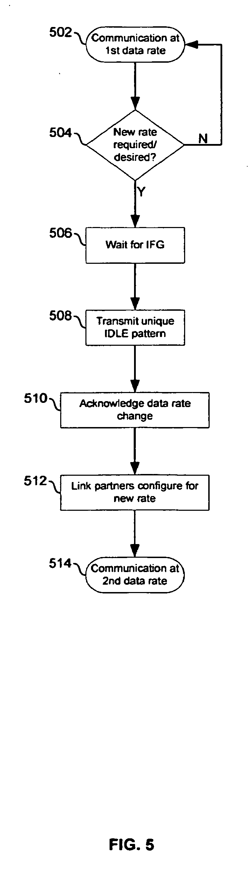

FIG. 5 is a flow chart illustrating exemplary steps for utilizing a distinct physical pattern on an active channel to indicate a data rate transition, in accordance with an embodiment of the invention. Referring to FIG. 5, the exemplary steps may begin with step 502 when a pair of nodes may be communicating over a network link at a first data rate. Subsequent to step 502, the exemplary steps may advance to step 504. In step 504, a first of the nodes may determine whether a new data rate is required and/or desirable on the network link. In instances that the current data rate is acceptable, the exemplary steps may return to step 502.

Returning to step 504, in instances that a new data rate is desirable and/or required on the network link, the exemplary steps may advance to step 506. In step 506, the first node may wait for an IPG and when the IFG arrives, the exemplary steps may advance to step 508. In step 508, the first node may transmit a distinct physical patter to indicate its desire and/or need to transition to a 2nd data rate. Subsequent to step 508, the exemplary steps may advance to step 510. In step 510, the second node may acknowledge the data rate change by transmitting a distinct physical pattern. Subsequent to step 510, the exemplary steps may advance to step 512. In step 512, the nodes may be configured to communicate at the 2nd data rate. Subsequent to step 512, the exemplary steps may advance to step 514. In step 514, the nodes may begin exchanging data over the network link at the 2^{nd} data rate.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for distinct physical pattern on an active channel to indicate a data rate transition for energy efficient Ethernet.

Exemplary aspects of a method and system for a distinct physical pattern 406 on an active channel 402 to indicate a data rate transition for energy efficient Ethernet. In this regard, one or more distinct physical patterns 406 may be transmitted on one or more active channels 402 of a network link 112 during an IPG to control a data rate on the network link 112. The unique physical pattern 406 may be transmitted instead of or in addition to one or more IDLE symbols 404. The distinct physical pattern 406 may communicate a data rate to be utilized on the network link 112 and/or indicate when a data rate transition is to occur on the network link 112. The distinct physical pattern 406 may be transmitted, and/or the data rate transition may occur, during a specified IPG or during a specified packet boundary, such as a specific bit of the packet. The data rate may be controlled, and the distinct physical pattern 406 may be determined, based on power consumption on the link 1102 and/or power consumption of one or more nodes 200 communicatively coupled to the link. In various embodiments of the invention, the distinct physical pattern 406 may comprise one or more control characters. In various embodiments of the invention, the distinct physical patter comprises an ordered set of voltage levels, symbols, and/or characters.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for networking, the method comprising:
determining if a data rate on a network link is higher or lower than a necessary or desired data rate based on link utilization, past or present traffic statistics, and/or available resources, namely power, buffer space, and/or processor time;
adapting the data rate to the necessary or desired data rate based on said determining to reduce power consumption on said network link and/or power consumptions of one or more network nodes communicatively coupled to said network link, wherein the method is **characterized by** further comprising:
transmitting (508), during an inter-packet gap, one or more distinct physical patterns on one or more active channels of said network link to control the data rate on said network link accordingly;
wherein the one or more distinct physical patterns comprises a plurality of IDLE symbols transmitted during a time interval otherwise used for a single IDLE symbol according to a predetermined communication standard.

2. The method according to claim 1, wherein the one or more distinct physical patterns comprises two or three IDLE symbols transmitted during a time interval otherwise used for a single IDLE symbol according to a predetermined communication standard.

3. The method according to claim 1, comprising communicating, via said one or more distinct physical patterns, a data rate to be utilized on one or more of said channels.

4. The method according to claim 3, comprising indicating, via said one or more physical patterns, one or more data rate management techniques to utilize for implementing said data rate.

5. The method according to claim 3, wherein said data rate is determined based on past and/or expected traffic on said network link.

6. The method according to claim 1, comprising indicating, via said one or more distinct physical patterns, when a data rate transition should occur on said one or more channels.

7. A system for networking, the system comprising:
one or more circuits operable to:
determine if a data rate on a network link is higher or lower than a necessary or desired data rate based on link utilization, past or present traffic statistics, and/or available resources, namely power, buffer space, and/or processor time;
adapt the data rate to the necessary or desired data rate based on said determining to reduce power consumption on said network link and/or power consumptions of one or more network nodes communicatively coupled to said network link, wherein the system is **characterized by** further comprising the one or more circuits operable to:
transmit, during an inter-packet gap, one or more distinct physical patterns (406) on one or more active channels (402a, 402b, 402c, 402d) of said network link (112) to control the data rate on said network link (112) accordingly;
wherein the one or more distinct physical patterns (406) comprises a plurality of IDLE symbols (404) transmitted during a time interval otherwise used for a single IDLE symbol (404) according to a predetermined communication standard.

8. The system according to claim 7, wherein the one or more distinct physical patterns (406) comprises two or three IDLE symbols (404) transmitted during a time interval otherwise used for a single IDLE symbol (404) according to a predetermined communication standard.

## Patentansprüche

1. Verfahren zur Vernetzung (Networking), wobei das Verfahren umfasst:
- Bestimmen, ob eine Datenrate einer Netzwerkverbindung größer oder kleiner als eine erforderliche oder gewünschte Datenrate ist, und zwar basierend auf der Verbindungsnutzung, früheren oder derzeitigen Verkehrsstatistiken und/oder verfügbaren Ressourcen, nämlich Energie, Pufferplatz und/oder Prozessorzeit,
- Anpassen der Datenrate an die erforderliche oder gewünschte Datenrate basierend auf der Bestimmung, um den Energieverbrauch der Netzwerkverbindung und/oder den Energieverbrauch eines oder mehrerer Netzwerkknoten zu reduzieren, die kommunikationsfähig mit der Netzwerkverbindung gekoppelt sind,
wobei das Verfahren **dadurch gekennzeichnet ist, dass** es ferner umfasst:
- Senden (508) eines oder mehrerer individueller physikalischer Muster über einen oder mehrere aktive Kanäle der Netzwerkverbindung während einer Lücke zwischen Paketen, um die Datenrate der Netzwerkverbindung entsprechend zu steuern,
- wobei das eine oder die mehreren individuellen physikalischen Muster eine Mehrzahl IDLE-Symbole umfassen, die während eines Zeitintervalls gesendet werden, das ansonsten, gemäß einem vorgegebenen Kommunikationsstandard, für ein einzelnes IDLE-Symbol verwendet wird.

2. Verfahren nach Anspruch 1,
wobei das eine oder die mehreren individuellen physikalischen Muster zwei oder drei IDLE-Symbole umfassen, die während eines Zeitintervalls gesendet werden, das ansonsten, gemäß einem vorgegebenen Kommunikationsstandard, für ein einzelnes IDLE-Symbol verwendet wird.

3. Verfahren nach Anspruch 1,
das das Kommunizieren, über das eine oder die mehreren individuellen physikalischen Muster, einer auf einem oder mehreren der Kanäle zu nutzenden Datenrate umfasst.

4. Verfahren nach Anspruch 3,
das das Angeben, über das eine oder die mehreren physikalischen Muster, einer oder mehrerer zum Implementieren der Datenrate zu nutzenden Datenratenmanagementtechniken umfasst.

5. Verfahren nach Anspruch 3,
wobei die Datenrate basierend auf dem früheren und/oder erwarteten Verkehr auf der Netzwerkverbindung bestimmt wird.

6. Verfahren nach Anspruch 1,
das das Angeben, über das eine oder die mehreren individuellen physikalischen Muster, wann ein Datenratenübergang auf dem einen oder den mehreren Kanälen auftreten sollte, umfasst.

7. System zur Vernetzung (Networking), wobei das System umfasst:
eine oder mehrere Schaltungen, die betriebsfähig dafür ausgelegt sind:
- zu bestimmen, ob eine Datenrate einer Netzwerkverbindung größer oder kleiner als eine erforderliche oder gewünschte Datenrate ist, und zwar basierend auf der Verbindungsnutzung, früheren oder derzeitigen Verkehrsstatistiken und/oder verfügbaren Ressourcen, nämlich Energie, Pufferplatz und/oder Prozessorzeit,
- die Datenrate an die erforderliche oder gewünschte Datenrate basierend auf der Bestimmung anzupassen, um den Energieverbrauch der Netzwerkverbindung und/oder den Energieverbrauch eines oder mehrerer Netzwerkknoten zu reduzieren,
die kommunikationsfähig mit der Netzwerkverbindung gekoppelt sind, wobei das System **dadurch gekennzeichnet ist, dass** es ferner die eine oder die mehreren Schaltungen umfasst, die betriebsfähig dafür ausgelegt sind:
- ein oder mehrere individuelle physikalische Muster (406) über einen oder mehrere aktive Kanäle (402a, 402b, 402c, 402d) der Netzwerkverbindung (112) während einer Lücke zwischen Paketen zu senden, um die Datenrate der Netzwerkverbindung (112) entsprechend zu steuern,
- wobei das eine oder die mehreren individuellen physikalischen Muster (406) eine Mehrzahl IDLE-Symbole (404) umfassen, die während eines Zeitintervalls gesendet werden, das ansonsten, gemäß einem vorgegebenen Kommunikationsstandard, für ein einzelnes IDLE-Symbol (404) verwendet wird.

8. System nach Anspruch 7,
wobei das eine oder die mehreren individuellen physikalischen Muster (406) zwei oder drei IDLE-Symbole (404) umfassen, die während eines Zeitintervalls gesendet werden, das ansonsten, gemäß einem vorgegebenen Kommunikationsstandard, für ein einzelnes IDLE-Symbol (404) verwendet wird.

## Revendications

1. Procédé de mise en réseau, le procédé comprenant :
la détermination si un débit de données sur une liaison réseau est supérieur ou inférieur à un débit de données nécessaire ou désiré sur la base d'une utilisation de liaison, de statistiques de trafic passé ou présent, et/ou de ressources disponibles, à savoir une puissance, un espace tampon, et/ou un temps de processeur ;
l'adaptation du débit de données au débit de données nécessaire ou désiré sur la base de ladite détermination pour réduire une consommation d'énergie sur ladite liaison réseau et/ou des consommations d'énergie d'un ou plusieurs noeuds de réseau couplés en communication à ladite liaison réseau, dans lequel le procédé est **caractérisé en ce que** comprenant en outre :
la transmission (508), pendant un intervalle inter-paquets, d'un ou plusieurs motifs physiques distincts sur un ou plusieurs canaux actifs de ladite liaison réseau pour contrôler le débit de données sur ladite liaison réseau en conséquence;
dans lequel le ou les plusieurs motifs physiques distincts comprennent une pluralité de symboles IDLE transmis pendant un intervalle de temps autrement utilisé pour un symbole IDLE unique conformément à une norme de communication prédéterminée.

2. Procédé selon la revendication 1, dans lequel le ou les plusieurs motifs physiques distincts comprennent deux ou trois symboles IDLE transmis pendant un intervalle de temps autrement utilisé pour un symbole IDLE unique conformément à une norme de communication prédéterminée.

3. Procédé selon la revendication 1, comprenant la communication, par l'intermédiaire dudit un ou desdits plusieurs motifs physiques distincts, d'un débit de données devant être utilisé sur un ou plusieurs desdits canaux.

4. Procédé selon la revendication 3, comprenant l'indication, par l'intermédiaire dudit un ou desdits plusieurs motifs physiques, d'une ou plusieurs techniques de gestion de débit de données à utiliser pour mettre en oeuvre ledit débit de données.

5. Procédé selon la revendication 3, dans lequel ledit débit de données est déterminé sur la base d'un trafic passé et/ou attendu sur ladite liaison radio.

6. Procédé selon la revendication 1, comprenant l'indication, par l'intermédiaire dudit un ou desdits plusieurs motifs physiques distincts, de quand une transition de débit de données doit avoir lieu sur ledit un canal ou lesdits plusieurs canaux.

7. Système de mise en réseau, le système comprenant :
un ou plusieurs circuits utilisables pour :
déterminer si un débit de données sur une liaison réseau est supérieur ou inférieur à un débit de données nécessaire ou désiré sur la base d'une utilisation de liaison, de statistiques de trafic passé ou présent, et/ou de ressources disponibles, à savoir une puissance, un espace tampon, et/ou un temps de processeur ;
adapter le débit de données au débit de données nécessaire ou désiré sur la base de ladite détermination pour réduire une consommation d'énergie sur ladite liaison réseau et/ou des consommations d'énergie d'un ou plusieurs noeuds de réseau couplés en communication à ladite liaison réseau, dans lequel le système est **caractérisé en ce que** comprenant en outre le ou les un ou plusieurs circuits utilisables pour :
transmettre, pendant un intervalle inter-paquets, un ou plusieurs motifs physiques distincts (406) sur un ou plusieurs canaux actifs (402a, 402b, 402c, 402d) de ladite liaison réseau (112) pour contrôler le débit de données sur ladite liaison réseau (112) en conséquence ;
dans lequel le ou les plusieurs motifs physiques distincts (406) comprennent une pluralité de symboles IDLE (404) transmis pendant un intervalle de temps autrement utilisé pour un symbole IDLE (404) unique conformément à une norme de communication prédéterminée.

8. Système selon la revendication 7, dans lequel le ou les plusieurs motifs physiques distincts (406) comprennent deux ou trois symboles IDLE (404) transmis pendant un intervalle de temps autrement utilisé pour un symbole IDLE (404) unique conformément à une norme de communication prédéterminée.
